# EUROPEAN PATENT SPECIFICATION

(11) **EP 0 705 214 B1**
(45) Date of publication and mention of the grant of the patent: **09.04.1997**
(21) Application number: 94918937.7
(22) Date of filing: 24.06.1994
(51) Int. Cl.: B65G 53/46

(54) **PNEUMATIC CONVEYING SYSTEMS**
PNEUMATISCHES FÖRDERSYSTEM
SYSTEMES DE TRANSPORT PNEUMATIQUE

(30) Priority: 24.06.1993 GB 9313025
(43) Date of publication of application: 10.04.1996
(73) Proprietor: Clyde Pneumatic Conveying Ltd., Doncaster, DN2 4SE (BE)
(72) Inventor: SNOWDON, Brian, Doncaster DN2 4SE (GB)
(74) Representative: Harrison, Michael Robert
(86) International application number: GB9401376
(87) International publication number: WO9500426

(56) References cited:
- EP-A- 0 212 256

## Description

This invention relates to pneumatic material conveying systems and in particular to that part of such a system for supplying granular or powdered material into a pneumatic conveying line.

It is known to provide apparatus for supplying material into a pneumatic conveying line which incorporates screw-type devices. Apparatus incorporating such devices is limited in capacity and its ability to handle fine powdered material due to the inherent weaknesses of the screw-type design when used as a metering feeder. At large flow rates, typically above 6m³/hour of material, there is a tendency for many fine powdered materials to retain air and remain in a "fluid" condition within the screw device. In this condition, the frictional relationship between the screw and tube in which it turns is lost, and the material "flushes" or runs uncontrollably through the screw device.

Document EP-A-0212256 discloses a pneumatic conveying system which utilises a pipe to alleviate the pressure differential between the conveying line input and the conveying line by utilising an auxiliary pipe between the feeder and the conveying line. Unfortunately, the document does not address the problem of leakage through to the feeder hopper or the lack of utility of the device at high pressures in the conveying line.

According to the present invention there is provided apparatus for supplying granular or powdered material into a pneumatic conveying line comprising a feed vessel having a material inlet through which material may be supplied to said feed vessel, said vessel having a material outlet through which material may be fed to the pneumatic conveying line said material outlet including a material feed device having circumferentially spaced apart, radial blades mounted for rotation about a substantially vertical axis in order to convey material falling between adjacent blades to an entrance to said pneumatic line located below said blades characterised in that the feed vessel is pressurised, means being provided to maintain the pressure therewithin when material is supplied to said feed vessel and pressure balance means interconnect the interior of the feed vessel and the said outlet to balance the pressure therebetween.

In apparatus according to the present invention, the material being supplied can be of fluid condition and the apparatus will work perfectly normally in such a situation. Capacities in excess of 100m³/hour are possible.

By using a rotary blade feeding device in a vessel in which the pressure therewithin is balanced with that of the pipeline to which the material is being supplied, it is possible to eliminate any pressure differentials between the vessel and the pipeline and as a result the apparatus can be used at very high pressures. Indeed the only limitation on the vessel is due to the strength of the components and the seals of the shaft turning the blades. As a result it can cope with pressures of 20 barg or higher.

Because of the balancing of the pressures as mentioned above, there is no need to provide very small clearances between the rotor blades and the housing. Such small clearances would be required if there was any significant pressure differential between the interior of the supply vessel and the pneumatic conveying line.

An embodiment of apparatus in accordance with the present invention will now be described, by way of example only, and with reference to the accompanying drawings, in which:-
- Figure 1 is a diagrammatic elevational view of apparatus of the invention;
- Figure 2 shows in detail, and mainly in vertical section, the material feed device of the apparatus of Figure 1; and
- Figure 3 is a further detailed view, largely in plan, of the feed device of the apparatus of Figure 1.

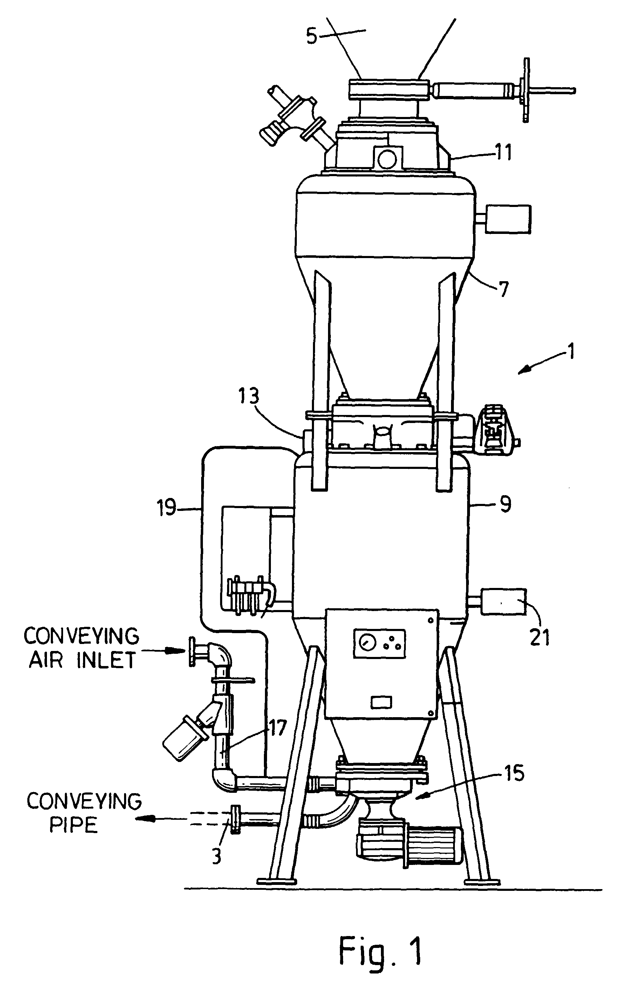

Referring to Figure 1 of the accompanying drawings, apparatus 1 for supplying granular or powdered material into a pneumatic conveying line 3 is located below a storage bin 5 for the material and includes a double pressure vessel system having pressure vessels 7 and 9. In this way material may be fed from storage bin 5 via valve 11 into pressure vessel 7. Valve 11 may be closed, vessel 7 pressurised and material then fed into pressure vessel 9 via valve 13. In this way the pressure within vessel 9 may be maintained throughout the operation of the entire system.

At the base of pressure vessel 9 there is located material feed device 15 which includes a rotary blade arrangement to be described in more detail below. Device 15 feeds material from pressure vessel 9 into conveying pipeline 3, conveying air being fed to device 15 via pipe 17. Interconnecting pipe 17 and the interior of pressure vessel 9 is a balance pipe 19 as a result of which the pressure in the feed device 15 is balanced with that in pressure vessel 9.

Material is fed from storage bin 5 into pressure vessel 9, via vessel 7, to an extent sufficient to maintain the material level within pressure vessel 9 above the level probe 21.

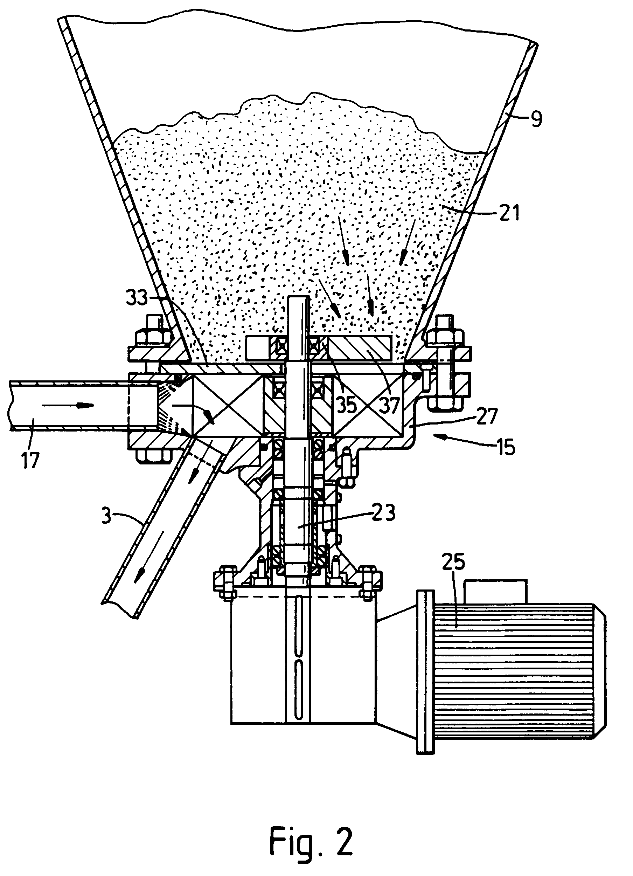

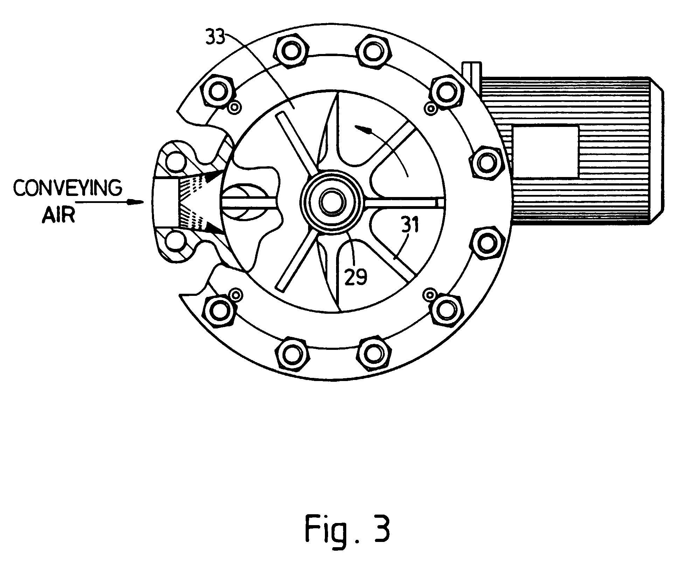

Referring to Figures 2 and 3 of the accompanying drawings material 21 within pressure vessel 9 is fed to conveying pipeline 3 by means of the rotary feed device 15, conveying air being supplied to said device by pipe 17. Rotary feed device 15 includes a drive shaft 23 mounted for rotation about a vertical axis and driven by means of motor and gear box arrangement 25. Mounted on drive shaft 15 within a housing 27 bolted to the bottom of pressure vessel 9, is a rotor 29 which includes a plurality of circumferentially spaced apart, radial blades 31.

Located directly above rotor 29 and extending over nearly half of the area swept up by the rotor is a plate 33. Plate 33 is located directly over the entrance to conveying pipeline 3 although separated therefrom by the rotor blades 31. Drive shaft 23 extends upwardly above rotor 29 and plate 33 terminating within pressure vessel 9 a short distance above this plate 33. Mounted on this upper portion of drive shaft 23 is a paddle wheel 35 having three circumferentially equally spaced apart, radially extending paddles 37.

As indicated by arrows in Figure 2 material flows from pressure vessel 9 and is swept by the paddles of paddle wheel 35 into the pockets between rotor blades 31 on that side of the rotor opposite the entrance to conveying pipeline 3, the other side being blocked by plate 33. As the rotor 29 turns, material is conveyed to the entrance to conveying pipeline 3. This material is propelled by air supplied along pipe 17 into conveying pipeline 3 to its point of use destination. Due to the balance of pressure between the pressure in the feed device 15 and the pressure vessel 9 above it, there is no need for the very small clearances between the rotor 29 and its housing 27 that would be required if there was a pressure differential and the pressure attainable in the conveying pipeline 3 is only limited by the strength of the vessel and the shaft seals in the feed device 15.

Adjustment of material flow rate is achieved by changing the speed of the motor 25 with an electrical frequency variator. In order to obtain very accurate feed rate control, the lower vessel can be mounted on a suitable weighing system.

## Claims

1. Apparatus for supplying granular or powdered material into a pneumatic conveying line comprising a feed vessel (9) having a material inlet (13) through which material may be supplied to said feed vessel, said vessel having a material outlet through which material may be fed to the pneumatic conveying line (3), said material outlet including a material feed device (15) having circumferentially spaced apart, radial blades (31) mounted for rotation about a substantially vertical axis in order to convey material falling between adjacent blades to an entrance to said pneumatic line located below said blades characterised in that the feed vessel is pressurised, means being provided to maintain the pressure therewithin when material is supplied to said feed vessel and pressure balance means (19) interconnect the interior of the feed vessel (9) and the said outlet to balance the pressure therebetween.

2. Apparatus according to Claim 1 in which the radial blades (13) are mounted for rotation on a common drive shaft extending from a central position at the base of the feed vessel (9) downwardly towards a drive mechanism arranged below said feed vessel(9).

3. Apparatus according to Claim 1 or Claim 2 in which the feed vessel (9) is provided with a plate extending horizontally over at least a part of the space swept out by the radial blades (31).

4. Apparatus according to Claim 3 in which the plate (33) extends over nearly half the area swept out by the radial blades (31).

5. Apparatus according to any of the preceding claims in which the radial blades (31) are mounted on a common drive shaft and, mounted also on the drive shaft (23), above said radial blades, is means for sweeping material located above the blades to ensure good feed of said material in a direction towards said blades.

6. Apparatus according to Claim 5 in which the sweeping means is in the form of a paddle wheel (35) having circumferentially spaced apart, radially extending paddles (37).

7. Apparatus according to any of the preceding claims in which the material outlet extends from the base of the feed vessel in a direction downwardly and radially outwardly from a position below the radial blades located radially outwardly of the centre of the feed vessel.

## Patentansprüche

1. Vorrichtung für die Zufuhr von körnigem oder pulverförmigem Material in eine Druckluftförderleitung, enthaltend einen Beschickungsbehälter (9) mit einem Materialeinlaß (13), durch den dem Beschickungsbehälter Material zugeführt werden kann, wobei der Behälter einen Materialauslaß aufweist, durch den der Druckluftförderleitung (3) Material zugeführt werden kann, und der Materialauslaß eine Materialzuführungseinrichtung (15) umfaßt, die in Umfangsrichtung mit einem Abstand zueinander angeordnete, radiale Flügel (31) aufweist, die zwecks Rotation um eine im wesentlichen vertikale Achse angebracht sind, um zwischen benachbarten Flügeln herunterfallendes Material zu einem unterhalb der Flügel angeordneten Zugang zur Druckluftleitung zu befördern, **dadurch gekennzeichnet**, daß der Beschickungsbehälter unter Druck steht, wobei ein Mittel vorgesehen ist, um den darin befindlichen Druck zu halten, wenn Material in den Beschikkungsbehälter geführt wird, und ein Druckausgleichsmittel (19) das Innere des Beschickungsbehälters (9) und den Auslaß miteinander verbindet, um den Druck zwischen diesen auszugleichen.

2. Vorrichtung nach Anspruch 1, bei der die radialen Flügel (13) zwecks Rotation auf einer gemeinsamen Antriebswelle angeordnet sind, die sich von einer zentralen Position am Unterteil des Zuführbebehälters (9) nach unten zu einem unterhalb des Zuführbehälters (9) angeordneten Antriebsmechanismus erstreckt.

3. Vorrichtung nach Anspruch 1 oder Anspruch 2, bei der der Beschikkungsbehälter (9) mit einer Platte versehen ist, die sich horizontal über wenigstens einen Teil des von den radialen Flügeln (31) überstrichenen Bereichs erstreckt.

4. Vorrichtung nach Anspruch 3, bei der sich die Platte (33) über nahezu die Hälfte des von den radialen Flügeln (31) überstrichenen Bereichs erstreckt.

5. Vorrichtung nach einem der vorhergehenden Ansprüche, bei der die radialen Flügel (31) auf einer gemeinsamen Antriebswelle montiert sind und, ebenfalls auf der Antriebswelle (23) angeordnet, oberhalb der radialen Flügel ein Mittel zur Mitnahme und zum Eindrücken von oberhalb der Flügel befindlichem Material angebracht ist, um eine günstige Materialzufuhr in Richtung auf die Flügel sicherzustellen.

6. Vorrichtung nach Anspruch 5, bei der das Mitnahmemittel die Form eines Schaufelrades (35) aufweist, das in Umfangsrichtung mit einem Abstand zueinander angeordnete, sich radial erstreckende Schaufeln (37) aufweist.

7. Vorrichtung nach einem der vorhergehenden Ansprüche, bei der sich der Materialauslaß vom Unterteil des Beschickungsbehälters nach unten und radial nach außen von einer Position unterhalb der radialen Flügel und radial außerhalb der Mitte des Beschickungsbehälters erstreckt.

## Revendications

1. Dispositif destiné à alimenter en matériau sous forme granulaire ou poudreuse une conduite de transport pneumatique comprenant un réservoir (9) d'alimentation muni d'un orifice d'admission (13) de matériau au travers duquel ce dernier peut être introduit dans ledit réservoir d'alimentation, ledit réservoir étant pourvu d'un orifice de sortie de matériau à travers lequel le matériau peut être alimenté vers la conduite de transport pneumatique (3), ledit orifice de sortie de matériau comprenant un dispositif (15) d'alimentation en matériau pourvu de lames (31) radiales espacées les unes des autres le long de la circonférence, les lames (31) radiales étant montées à rotation autour d'un axe sensiblement vertical de manière à transporter le matériau tombant entre les lames adjacentes jusqu'à une entrée de ladite conduite pneumatique disposée au-dessous desdites lames, caractérisé en ce que le réservoir d'alimentation est pressurisé, des moyens étant prévus pour maintenir la pression dans celui-ci lorsque le matériau est alimenté vers ledit réservoir d'alimentation et des moyens (19) d'équilibrage en pression reliant l'intérieur du réservoir (9) d'alimentation et ledit orifice de sortie pour équilibrer les pressions de ces derniers.

2. Dispositif selon la revendication 1 dans lequel les lames (13) radiales sont montées à rotation sur un axe commun de commande s'étendant vers le bas depuis une position centrale à la base du réservoir (9) d'alimentation, vers un mécanisme de commande disposé en dessous dudit réservoir (9) d'alimentation.

3. Dispositif selon la revendication 1 ou 2 dans lequel le réservoir (9) d'alimentation est muni d'un plateau s'étendant horizontalement au-dessus d'au moins une partie de l'espace balayé par les lames (31) radiales.

4. Dispositif selon la revendication 3 dans lequel le plateau (33) s'étend au-dessus de près de la moitié de la zone balayée par les lames (31) radiales.

5. Dispositif selon l'une des revendications précédentes dans lequel les lames (31) radiales sont montées sur un axe de commande commun et des moyens pour balayer le matériau disposé au-dessus des lames, sont montés également sur l'axe (23) de commande au-dessus desdites lames radiales, pour assurer une bonne alimentation en matériau dans la direction desdites lames.

6. Dispositif selon la revendication 5 dans lequel les moyens de balayage se présentent sous la forme d'une roue (35) à palettes pourvue de palettes (37) s'étendant radialement, espacées les unes des autres le long de la circonférence.

7. Dispositif selon l'une des revendications précédentes dans lequel l'orifice de sortie de matériau s'étend à partir de la base du réservoir d'alimentation suivant une direction descendante et radiale vers l'extérieur, depuis une position en dessous des lames radiales située radialement en s'éloignant du centre du réservoir d'alimentation.
